(19) Europäisches Patentamt
European Patent Office
Office européen des brevets

(11) **EP 4 614 989 A1**

(12) **EUROPEAN PATENT APPLICATION**
published in accordance with Art. 153(4) EPC

(43) Date of publication:
**10.09.2025 Bulletin 2025/37**

(21) Application number: **23900394.0**

(22) Date of filing: **13.11.2023**

(51) International Patent Classification (IPC):
***H04N 21/435*** (2011.01)       ***H04N 19/46*** (2014.01)

(52) Cooperative Patent Classification (CPC):
**H04N 19/46; H04N 21/435**

(86) International application number:
**PCT/JP2023/040738**

(87) International publication number:
**WO 2024/122273 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.12.2022 US 202263430118 P**

(71) Applicant: **Panasonic Intellectual Property
Corporation
of America
Torrance, CA 90504 (US)**

(72) Inventors:
• **GAO, Jingying
Singapore 469332 (SG)**

• **TEO, Han Boon
Singapore 469332 (SG)**
• **LIM, Chong Soon
Singapore 469332 (SG)**
• **YADAV, Praveen Kumar
Singapore 469332 (SG)**
• **ABE, Kiyofumi
Kadoma-shi, Osaka 571-0057 (JP)**
• **NISHI, Takahiro
Kadoma-shi, Osaka 571-0057 (JP)**
• **TOMA, Tadamasa
Kadoma-shi, Osaka 571-0057 (JP)**

(74) Representative: **Grünecker Patent- und
Rechtsanwälte
PartG mbB
Leopoldstraße 4
80802 München (DE)**

(54) **DECODING DEVICE, ENCODING DEVICE, DECODING METHOD, AND ENCODING METHOD**

(57)     A decoder includes circuitry and a memory connected to the circuitry. The circuitry receives a bitstream from an autonomous travelling device including an imaging unit, decodes an image captured by the imaging unit from the bitstream, decodes image detection information that is detection information within the image, regarding an object included in the image, from the bitstream, and decodes real space detection information that is detection information in real space, regarding the object, from the bitstream.

FIG.10

## Description

### Technical Field

The present disclosure relates to a decoder, an encoder, a decoding method, and an encoding method.

### Background Art

Patent Literature 1 discloses an autonomous vehicle including an object detection unit and an autonomous module. The object detection unit measures a detected distance using a camera or the like. The autonomous module determines a control range limited within the detected distance, and reflects the learned driving tendency of the user and the driving tendency defined by the external data in the driving control-related data of the vehicle.

### Citation List

### Patent Literature

Patent Literature 1: US Patent Publication No. 2021/0278840

### Summary of Invention

An object of the present disclosure is to effectively utilize detection information regarding an object present around an autonomous travelling device, thereby improving safety of the autonomous travelling device such as collision avoidance performance.

A decoder according to one aspect of the present disclosure includes circuitry, and a memory connected to the circuitry, in which the circuitry receives a bitstream from an autonomous travelling device including an imaging unit, decodes an image captured by the imaging unit from the bitstream, decodes image detection information that is detection information within the image, regarding an object included in the image, from the bitstream, and decodes real space detection information that is detection information in real space, regarding the object, from the bitstream.

### Brief Description of Drawings

FIG. 1 is a diagram illustrating a simplified configuration of an information processing system according to a first embodiment of the present disclosure.
FIG. 2 is a flowchart illustrating a flow of processing executed by circuitry of an encoder.
FIG. 3 is a diagram schematically illustrating an example of a travelling situation of an autonomous travelling device.
FIG. 4 is a diagram schematically illustrating an example of an image captured by an imaging unit.
FIG. 5 is a diagram schematically illustrating an example of an analysis result of an image.
FIG. 6 is a diagram illustrating an example of real space detection information and image detection information regarding an object in a simplified manner.
FIG. 7 is a diagram illustrating an example of a coordinate system of an autonomous travelling device.
FIG. 8 is a diagram illustrating a simplified data structure of a bitstream.
FIG. 9 is a diagram illustrating an example of syntax in a simplified manner.
FIG. 10 is a flowchart illustrating a flow of processing executed by circuitry of a decoder.
FIG. 11 is a diagram illustrating an example of an example of a display image in a simplified manner.
FIG. 12 is a diagram illustrating an example of a display image in a simplified manner.
FIG. 13 is a diagram illustrating an example of a display image in a simplified manner.
FIG. 14 is a diagram illustrating the display image illustrated in FIG. 13 from which a part of figures extracted.
FIG. 15 is a diagram illustrating an example of a display image in a simplified manner.
FIG. 16 is a diagram illustrating a simplified configuration of an information processing system according to a modification.
FIG. 17 is a flowchart illustrating a flow of processing executed by circuitry of an encoder.
FIG. 18 is a diagram illustrating an example of a syntax in a simplified manner.
FIG. 19 is a flowchart illustrating a flow of processing executed by circuitry of a decoder.
FIG. 20 is a diagram illustrating an example of a display image in a simplified manner.
FIG. 21 is a diagram illustrating an example of a display image in a simplified manner.

FIG. 22 is a diagram illustrating a simplified configuration of an information processing system according to a second embodiment of the present disclosure.

FIG. 23 is a flowchart illustrating a flow of processing executed by circuitry of a decoder.

FIG. 24 is a diagram schematically illustrating an example of an image captured by an imaging unit.

FIG. 25 is a diagram illustrating an example of association information in a simplified manner.

## Description of Embodiments

(Knowledge underlying Present Disclosure)

In a product delivery system using an autonomous travelling device such as an autonomous vehicle, an unmanned autonomous travelling device travels on a sidewalk at the same speed as a pedestrian and delivers a product. A camera, a GPS receiver, an obstacle sensor, and the like are mounted on the autonomous travelling device, and the cameras, the GPS receiver, and the obstacle sensor complement each other to realize safe travelling. However, there is a technical limit to reliably perform safe travelling even in a very complicated environment, and when a problem occurs, human operator intervention by remote control is required. Therefore, the autonomous travelling device transmits the image captured by the camera mounted on own device to the monitoring center where the operator is resident in real time.

However, in a case where one operator simultaneously monitors a plurality of autonomous travelling devices, it is difficult for the operator to instantaneously and accurately grasp the situations around the autonomous travelling devices even if the operator visually recognizes the images received from the autonomous travelling devices.

In order to solve such a problem, the present inventor has found that the above problem can be solved by transmitting not only an image captured by a camera but also detection information in a real space detected by a sensor mounted on an autonomous travelling device from the autonomous travelling device to a monitoring center and effectively utilizing the information, and has arrived at the present disclosure.

Next, each aspect of the present disclosure will be described.

A decoder according to a first aspect of the present disclosure includes circuitry and a memory connected to the circuitry, in which the circuitry receives a bitstream from an autonomous travelling device including an imaging unit, decodes an image captured by the imaging unit from the bitstream, decodes image detection information that is detection information within the image, regarding an object included in the image, from the bitstream, and decodes real space detection information that is detection information in real space, regarding the object, from the bitstream.

According to the first aspect, the decoder can effectively utilize the screen detection information and the real space detection information regarding the object existing around the autonomous travelling device, thereby improving the safety of the autonomous travelling device such as the collision avoidance performance. In addition, it is possible to improve the decision making on the operation of the autonomous travelling device for improving the safety of the autonomous travelling device under the complicated environment.

According to a second aspect of the present disclosure, in the decoder of the first aspect, the image detection information regarding the object may include position information of the object in the image.

According to the second aspect, the position information of the object in the image can be effectively utilized on the decoder side.

According to a third aspect of the present disclosure, in the decoder of the first or second aspect, the real space detection information regarding the object may include at least one of position information of the object in the real space and movement information of the object in the real space.

According to the third aspect, the position information and the movement information of the object in the real space can be effectively utilized on the decoder side.

According to a fourth aspect of the present disclosure, in the decoder of the third aspect, the position information of the object may include a coordinate value in a circular coordinate system based on the autonomous travelling device, a coordinate value in a Cartesian coordinate system based on the autonomous travelling device, or a coordinate value in a geographic coordinate system.

According to the fourth aspect, the position of the object can be accurately specified by the position information including the coordinate value.

According to a fifth aspect of the present disclosure, in the decoder of the third or fourth aspect, the movement information of the object may include at least one of an absolute speed of the object or a relative speed of the object with respect to the autonomous travelling device, and an absolute moving direction of the object or a relative moving direction of the object with respect to the autonomous travelling device.

According to the fifth aspect, at least one of the speed and the moving direction of the object can be accurately specified by the movement information including at least one of the absolute speed or the relative speed and the absolute moving direction or the relative moving direction.

According to a sixth aspect of the present disclosure, in the decoder of any one of the first to fifth aspects, the circuitry may decode real space detection information regarding the autonomous travelling device from the bitstream, wherein the real space detection information regarding the autonomous travelling device may include position information of the autonomous travelling device in the real space and movement information of the autonomous travelling device in the real space.

According to the sixth aspect, the position information and the movement information of the autonomous travelling device in the real space can be effectively utilized on the decoder side.

According to a seventh aspect of the present disclosure, in the decoder of the sixth aspect, the position information of the autonomous travelling device may include a coordinate value in a geographic coordinate system.

According to the seventh aspect, an absolute position of the autonomous travelling device can be accurately specified by the position information including the coordinate value in the geographic coordinate system.

According to an eighth aspect of the present disclosure, in the decoder of the sixth or seventh aspect, the movement information of the autonomous travelling device may include at least one of an absolute speed and an absolute moving direction of the autonomous travelling device.

According to the eighth aspect, at least one of the absolute speed and the absolute moving direction of the autonomous travelling device can be accurately specified by the movement information.

According to a ninth aspect of the present disclosure, in the decoder of any one of the sixth to eighth aspects, the circuitry may decode the image detection information and the real space detection information regarding the object and the real space detection information regarding the autonomous travelling device from a supplemental enhancement information (SEI) region of the bitstream.

According to the ninth aspect, the image detection information and the real space detection information regarding the object, and the real space detection information regarding the autonomous travelling device are encoded in the SEI region of the bitstream, so that the decoder can easily perform the processing.

According to a tenth aspect of the present disclosure, in the decoder of any one of the first to ninth aspects, the circuitry may generate a display image for human vision, and the display image may include the object, and at least one of display position information of the object in the real space and display movement information of the object in the real space.

According to the tenth aspect, the operator can instantaneously and accurately grasp the situation around the autonomous travelling device by visually recognizing the display image including the display position information and the display movement information of the object in the real space.

According to an eleventh aspect of the present disclosure, in the decoder of the tenth aspect, the autonomous travelling device may include a plurality of autonomous travelling devices, and the circuitry may generate the display image based on a plurality of images decoded from a plurality of bitstreams received from the plurality of autonomous travelling devices.

According to the eleventh aspect, since the blind spots at the time of imaging can be complemented by the plurality of images captured by the plurality of autonomous travelling devices, the convenience of the display image can be improved.

According to a twelfth aspect of the present disclosure, in the decoder of the tenth or eleventh aspect, the circuitry may use position information of the object in the real space, which is included in the real space detection information regarding the object and decoded from the bitstream, as the display position information of the object, and may use movement information of the object in the real space, which is included in the real space detection information regarding the object and decoded from the bitstream, as the display movement information of the object.

According to the twelfth aspect, the display position information and the display movement information can easily be generated.

According to a thirteenth aspect of the present disclosure, in the decoder of the tenth or eleventh aspect, the circuitry may decode position information of the autonomous travelling device in the real space and movement information of the autonomous travelling device in the real space from the bitstream, calculate the display position information of the object by converting position information of the object in the real space, which is included in the real space detection information regarding the object and decoded from the bitstream, using the position information of the autonomous travelling device in the real space, which is decoded from the bitstream, and calculate the display movement information of the object by converting movement information of the object in the real space, which is included in the real space detection information regarding the object and decoded from the bitstream, using the movement information of the autonomous travelling device in the real space decoded from the bitstream.

According to the thirteenth aspect, the relative position of the object can be converted into the absolute position and displayed, and the relative speed and the relative moving direction of the object can be converted into the absolute speed and the absolute moving direction and displayed.

According to a fourteenth aspect of the present disclosure, in the decoder of the tenth or eleventh aspect, the circuitry may calculate the display movement information of the object based on a plurality of pieces of position information of the object at a plurality of times in the real space, the plurality of pieces of position information being included in the real space detection information regarding the object and decoded from the bitstream.

According to the fourteenth aspect, even in a case where the bitstream received from the autonomous travelling device does not include the movement information of the object in the real space, the display movement information of the object can be appropriately calculated based on the plurality of pieces of position information of the object at the plurality of times in the real space.

According to a fifteenth aspect of the present disclosure, in the decoder of any one of the first to fourteenth aspects, the decoder may be mounted on another autonomous travelling device other than the autonomous travelling device, and the circuitry may control an operation of the other autonomous travelling device based on the image detection information and the real space detection information regarding the object, which are decoded from the bitstream received from the autonomous travelling device, and image detection information and real space detection information regarding an object included in an image captured by an imaging unit of the other autonomous travelling device.

According to the fifteenth aspect, by mutually communicating the image detection information and the real space detection information regarding the object among the plurality of autonomous travelling devices, each autonomous travelling device can effectively utilize these pieces of information received from other autonomous travelling devices for the operation control of the own device, thereby improving the safety of the autonomous travelling device such as the collision avoidance performance.

According to a sixteenth aspect of the present disclosure, in the decoder of the fifteenth aspect, the circuitry may convert the real space detection information regarding the object, which is decoded from the bitstream received from the autonomous travelling device and uses a coordinate system based on the autonomous travelling device, into the real space detection information regarding the object, which uses a coordinate system based on the other autonomous travelling device.

According to the sixteenth aspect, by the conversion processing of the coordinate system, each autonomous travelling device can use the real space detection information regarding the object detected by another autonomous travelling device as the real space detection information regarding the object detected by own autonomous travelling device.

An encoder according to a seventeenth aspect of the present disclosure is an encoder mounted on an autonomous travelling device including an imaging unit, the encoder including: circuitry; and a memory connected to the circuitry, in which the circuitry encodes an image captured by the imaging unit into a bitstream, encodes image detection information that is detection information within the image, regarding an object included in the image, into the bitstream, and encodes real space detection information that is detection information in a real space, regarding the object, into the bitstream.

According to the seventeenth aspect, by encoding the screen detection information and the real space detection information regarding the object existing around the autonomous travelling device into the bitstream, the decoder that receives the bitstream can effectively utilize these pieces of information, thereby improving the safety of the autonomous travelling device such as the collision avoidance performance. In addition, it is possible to improve the decision making on the operation of the autonomous travelling device for improving the safety of the autonomous travelling device under the complicated environment.

According to an eighteenth aspect of the present disclosure, in the encoder of the seventeenth aspect, the image detection information regarding the object may include position information of the object in the image.

According to the eighteenth aspect, the position information of the object in the image can be effectively utilized on the decoder side.

According to a nineteenth aspect of the present disclosure, in the encoder of the seventeenth or eighteenth aspect, the real space detection information regarding the object may include at least one of position information of the object in the real space and movement information of the object in the real space.

According to the nineteenth aspect, the position information and the movement information of the object in the real space can be effectively utilized on the decoder side.

According to a twentieth aspect of the present disclosure, in the encoder of the nineteenth aspect, the position information of the object may include a coordinate value in a circular coordinate system based on the autonomous travelling device, a coordinate value in a Cartesian coordinate system based on the autonomous travelling device, or a coordinate value in a geographic coordinate system.

According to the twentieth aspect, the position of the object can be accurately specified by the position information including the coordinate value.

According to a twenty-first aspect of the present disclosure, in the encoder of the nineteenth or twentieth aspect, the movement information of the object may include at least one of an absolute speed of the object or a relative speed of the object with respect to the autonomous travelling device, and an absolute moving direction of the object or a relative moving direction of the object with respect to the autonomous travelling device.

According to the twenty-first aspect, at least one of the speed and the moving direction of the object can be accurately specified by the movement information including at least one of the absolute speed or the relative speed and the absolute moving direction or the relative moving direction.

According to a twenty-second aspect of the present disclosure, in the encoder of any one of the seventeenth to twenty-first aspects, the circuitry may encode real space detection information regarding the autonomous travelling device into the bitstream, and the real space detection information regarding the autonomous travelling device may include position information of the autonomous travelling device in the real space and movement information of the autonomous travelling device in the real space.

According to the twenty-second aspect, the position information and the movement information of the autonomous travelling device in the real space can be effectively utilized on the decoder side.

According to a twenty-third aspect of the present disclosure, in the encoder of the twenty-second aspect, the position information of the autonomous travelling device may include a coordinate value in a geographic coordinate system.

According to the twenty-third aspect, the absolute position of the autonomous travelling device can accurately be specified by the position information including the coordinate value in the geographic coordinate system.

According to a twenty-fourth aspect of the present disclosure, in the encoder of the twenty-second or twenty-third aspect, the movement information of the autonomous travelling device may include at least one of an absolute speed and an absolute moving direction of the autonomous travelling device.

According to the twenty-fourth aspect, at least one of the absolute speed and the absolute moving direction of the autonomous travelling device can accurately be specified by the movement information.

According to a twenty-fifth aspect of the present disclosure, in the encoder of any one of the seventeenth to twenty-fourth aspects, the circuitry may encode the image detection information and the real space detection information regarding the object in an SEI region of the bitstream.

According to the twenty-fifth aspect, the decoder side can easily perform processing by encoding the image detection information and the real space detection information regarding the object in the SEI region of the bitstream.

According to a twenty-sixth aspect of the present disclosure, in the encoder of any one of the seventeenth to twenty-fifth aspects, the autonomous travelling device may include a detection unit that detects the object in the real space, and the circuitry may derive the real space detection information regarding the object based on a value obtained by converting a detection value by the detection unit from a coordinate system of the detection unit to a coordinate system of the autonomous travelling device.

According to the twenty-sixth aspect, the real space detection information regarding the object can be appropriately derived by the conversion processing from the unique coordinate system of the detection unit to the common coordinate system of the autonomous travelling device.

A decoding method according to a twenty-seventh aspect of the present disclosure includes, by a decoder, receiving a bitstream from an autonomous travelling device including an imaging unit, decoding an image captured by the imaging unit from the bitstream, decoding image detection information that is detection information within the image, regarding an object included in the image, from the bitstream, and decoding real space detection information that is detection information in a real space, regarding the object, from the bitstream.

According to the twenty-seventh aspect, the decoder can effectively utilize the screen detection information and the real space detection information regarding the object existing around the autonomous travelling device, thereby improving the safety of the autonomous travelling device such as the collision avoidance performance. In addition, it is possible to improve the decision making on the operation of the autonomous travelling device for improving the safety of the autonomous travelling device under the complicated environment.

An encoding method according to a twenty-eighth aspect of the present disclosure includes, by an encoder mounted on an autonomous travelling device including an imaging unit, encoding an image captured by the imaging unit into a bitstream, encoding image detection information which is detection information within the image, regarding an object included in the image, into the bitstream, and encoding real space detection information which is detection information in a real space, regarding the object, into the bitstream.

According to the twenty-eighth aspect, by encoding the screen detection information and the real space detection information regarding the object existing around the autonomous travelling device into the bitstream, the decoder that receives the bitstream can effectively utilize these pieces of information, thereby improving the safety of the autonomous travelling device such as the collision avoidance performance. In addition, it is possible to improve the decision making on the operation of the autonomous travelling device for improving the safety of the autonomous travelling device under the complicated environment.

(Embodiments of Present Disclosure)

Embodiments of the present disclosure will be described below in detail with reference to the drawings. Note that elements denoted by the same reference signs in different drawings represent the same or corresponding elements.

Note that each embodiment described below shows one specific example of the present disclosure. The numerical values, shapes, constituent elements, steps, orders of the steps, and the like of the following embodiments are merely examples, and do not intend to limit the present disclosure. A constituent element not described in an independent claim representing the highest concept among constituent elements in the embodiments below is described as an arbitrary constituent element. In all embodiments, respective items of content can be combined.

(First Embodiment)

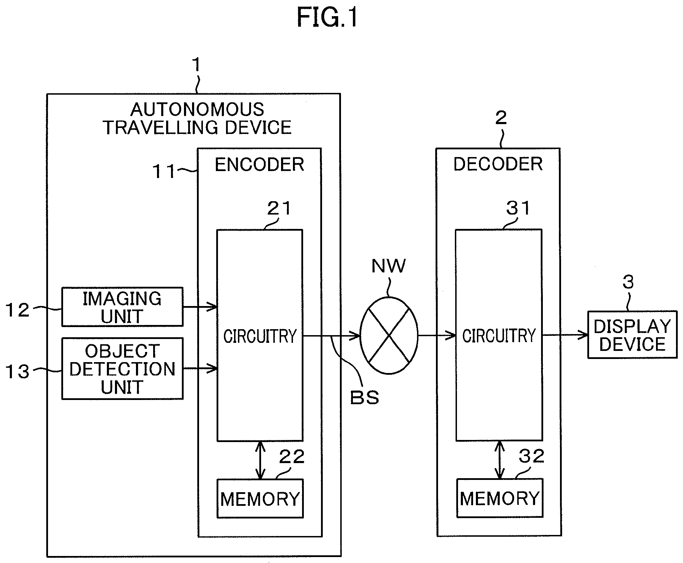

FIG. 1 is a diagram illustrating a simplified configuration of an information processing system according to a first embodiment of the present disclosure. The information processing system includes an autonomous travelling device 1, a transmission path NW, a decoder 2, and a display device 3.

The autonomous travelling device 1 is, for example, an autonomous vehicle that delivers a product in an unmanned manner in a product delivery system. The autonomous travelling device 1 includes an encoder 11, an imaging unit 12, and an object detection unit 13. Although one autonomous travelling device 1 is illustrated in FIG. 1, a plurality of autonomous travelling devices 1 having the same configuration may exist.

The encoder 11 includes circuitry 21 and a memory 22 connected to the circuitry 21. The circuitry 21 includes a processor such as a CPU. The memory 22 includes an arbitrary recording medium such as a ROM, a RAM, an HDD, an SSD, or a semiconductor memory. The memory 22 stores data to be processed or data being processed by the circuitry 21, and the like.

The imaging unit 12 includes a camera including an optical system, a CMOS image sensor, and the like. The imaging unit 12 captures an image of the periphery of the autonomous travelling device 1 (particularly, the front in the moving direction).

An object detection unit 27 includes a light detection and ranging (LiDAR) or the like. The object detection unit 27 detects an object existing around the autonomous travelling device 1 in the real space. The object detection unit 27 inputs, to the circuitry 21, real space detection information that is detection information regarding an object in the real space. The real space detection information includes a distance to the object, a direction in which the object exists, a shape of the object, and the like.

The transmission path NW is the Internet, a wide area network (WAN), a local area network (LAN), or an arbitrary combination of them. The transmission path NW is desirably a private network or the like for secured communication with limited access.

The decoder 2 and the display device 3 are disposed, for example, in a monitoring center where an operator who remotely monitors the autonomous travelling device 1 is resident.

The decoder 2 includes circuitry 31 and a memory 32 connected to the circuitry 31. The circuitry 31 includes a processor such as a CPU. The memory 32 includes an arbitrary recording medium such as a ROM, a RAM, an HDD, an SSD, or a semiconductor memory. The memory 32 stores data to be processed or data being processed by the circuitry 31, and the like.

The display device 3 is a liquid crystal display, an organic EL display, or the like.

The circuitry 21 of the encoder 11 transmits a bitstream BS to the decoder 2 via the transmission path NW. The circuitry 31 of the decoder 2 receives the bitstream BS and generates a display image for human vision by an operator. The display device 3 displays the display image.

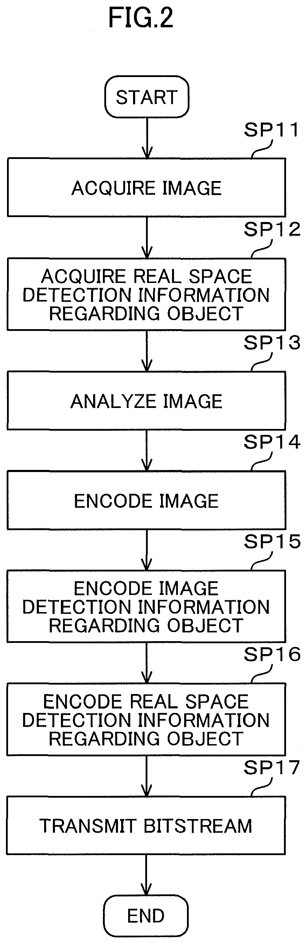

FIG. 2 is a flowchart illustrating a flow of processing executed by the circuitry 21 of the encoder 11.

In step SP11, the circuitry 21 acquires the image captured by the imaging unit 12. The image includes an object existing around the autonomous travelling device 1.

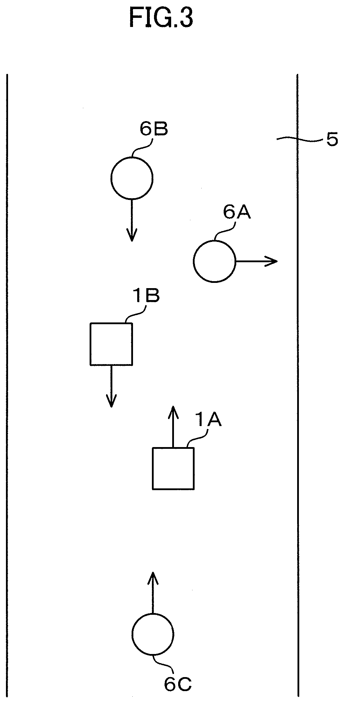

FIG. 3 is a diagram schematically illustrating an example of a travelling situation of the autonomous travelling device 1. Autonomous travelling devices 1A and 1B and pedestrians 6A to 6C are present on a sidewalk 5. The autonomous travelling device 1A travels in the upward direction of the paper plane. The autonomous travelling device 1B travels in the downward direction of the paper plane in front of the autonomous travelling device 1A in the moving direction. The pedestrian 6A is walking in the right direction on the paper plane in front of the autonomous travelling device 1A in the moving direction. The pedestrian 6B is walking in the downward direction on the paper plane in front of the autonomous travelling device 1A in the moving direction. The pedestrian 6C is walking in the upward direction of the paper plane behind the autonomous travelling device 1A in the moving direction.

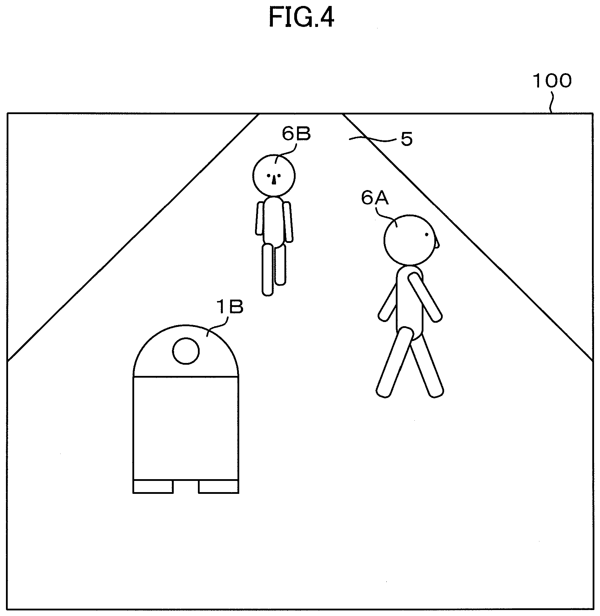

FIG. 4 is a diagram schematically illustrating an example of an image 100 captured by the imaging unit 12 of the autonomous travelling device 1A. The image 100 includes the autonomous travelling device 1B and the pedestrian 6B moving toward the own device (autonomous travelling device 1A), and the pedestrian 6A crossing in front of the own device.

In step SP12, the circuitry 21 acquires the real space detection information regarding the object included in the image 100 from the object detection unit 13. The real space detection information regarding the object includes a distance to the object, a direction in which the object exists, a shape of the object, and the like for each of the autonomous travelling device 1B and the pedestrians 6A and 6B which are objects. Step SP12 may be executed simultaneously with step SP11.

In step SP13, the circuitry 21 analyzes the image 100 acquired in step SP11. The analysis of the image 100 includes, for example, object detection processing and object recognition processing using a machine-learned estimation model. The circuitry 21 generates image detection information that is detection information within the image 100 regarding an object included in the image 100. The image detection information includes position information of an object in the image 100 as a result of the object detection processing. The image detection information may include attribute information or the like of the object in the image 100 as a result of the object recognition processing. The attribute indicates a type of an object such as an autonomous travelling device, a person, or a bicycle.

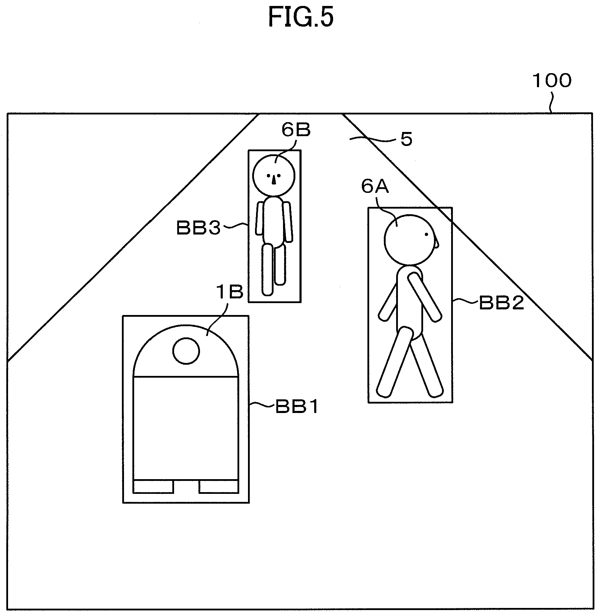

FIG. 5 is a diagram schematically illustrating an example of an analysis result of the image 100 by the circuitry 21. The circuitry 21 sets a bounding box BB surrounding the object in the image 100 as the position information of the object in the image 100. Specifically, the circuitry 21 sets a bounding box BB1 surrounding the autonomous travelling device 1B, a bounding box BB2 surrounding the pedestrian 6A, and a bounding box BB3 surrounding the pedestrian 6B.

The circuitry 21 designates the position and shape of the bounding box BB by coordinate values of a specific vertex (for example, a vertex of the upper left corner) of the bounding box BB and the height and width of the bounding box BB. Alternatively, the circuitry 21 may designate the position and shape of the bounding box BB by the coordinate values of the center point of the bounding box BB and the height and width of the bounding box BB. Alternatively, the circuitry 21 may designate the position and shape of the bounding box BB by the coordinate values of the four vertices of the bounding box BB. Alternatively, the circuitry 21 may designate the position and shape of the bounding box BB by coordinate values of two vertices located on a diagonal line of the bounding box BB.

Furthermore, the circuitry 21 associates the object in the real space detected by the object detection unit 13 with the object in the image 100 detected by the image analysis.

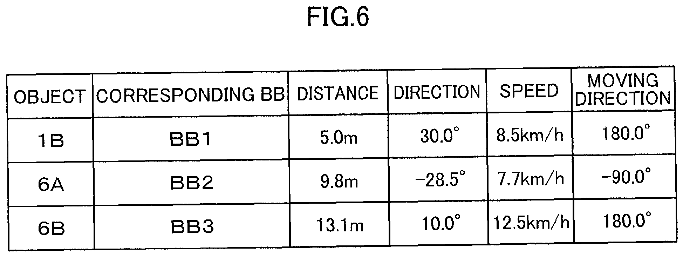

FIG. 6 is a diagram illustrating an example of the real space detection information and the image detection information regarding the object in a simplified manner. The real space detection information includes position information and movement information. The position information includes a distance and a direction. The movement information includes a speed and a moving direction. The circuitry 21 calculates the speed and the moving direction of the object based on the detection results of the position of the object detection unit 13 at a plurality of times. However, the calculation of the movement information including the speed and the moving direction of the object may be performed by the circuitry 31 of the decoder 2 instead of the circuitry 21 of the encoder 11. The image detection information includes information indicating the position and shape of the corresponding bounding box BB.

The origin of the coordinate system of the object detection unit 13 is the center point of the object detection unit 13, the origin of the coordinate system of the autonomous travelling device 1A is the center point of the autonomous travelling device 1A, and both are different. Therefore, the circuitry 21 derives the real space detection information regarding the object based on the value obtained by converting the detection value by the object detection unit 13 from the unique coordinate system of the object detection unit 13 to the common coordinate system of the autonomous travelling device 1A.

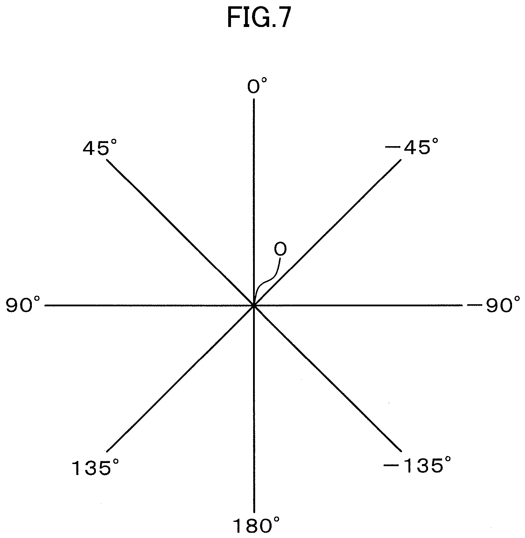

FIG. 7 is a diagram illustrating an example of a coordinate system of the autonomous travelling device 1A. In the example illustrated in FIG. 7, the coordinate system of the autonomous travelling device 1A is a circular coordinate system, and the origin O of the coordinate system is a center point of the autonomous travelling device 1A. The angle of 0° in the coordinate system corresponds to the moving direction of the autonomous travelling device 1A. The position of the object is indicated by the distance coordinate value and the angle coordinate value in the circular coordinate system. The angle coordinate value in the circular coordinate system indicates the moving direction of the object.

In the example illustrated in FIG. 6, the distance, the direction, the speed, and the moving direction are a relative distance, a relative direction, a relative speed, and a relative moving direction of the object with respect to the autonomous travelling device 1A.

For the autonomous travelling device 1B that is an object, the corresponding bounding box BB is the bounding box BB1, the relative distance is 5.0 m, the relative direction is 30.0°, the relative speed is 8.5 km/h, and the relative moving direction is 180.0°. In addition, for the pedestrian 6A that is an object, the corresponding bounding box BB is the bounding box BB2, the relative distance is 9.8 m, the relative direction is -28.5°, the relative speed is 7.7 km/h, and the relative moving direction is -90.0°. Furthermore, for the pedestrian 6B that is an object, the corresponding bounding box BB is the bounding box BB3, the relative distance is 13.1 m, the relative direction is 10.0°, the relative speed is 12.5 km/h, and the relative moving direction is 180.0°.

Note that the coordinate system of the autonomous travelling device 1A is not limited to the circular coordinate system described above, and may be a Cartesian coordinate system. For example, the Cartesian coordinate system may indicate the position of the object by a value of the X axis and a value of the Y axis with the front-rear direction of the autonomous travelling device 1A as the X axis, the left-right direction of the autonomous travelling device 1A as the Y axis, and the center point of the autonomous travelling device 1A as the origin.

In step SP14, the circuitry 21 encodes the image 100 acquired in step SP11 into the bitstream BS.

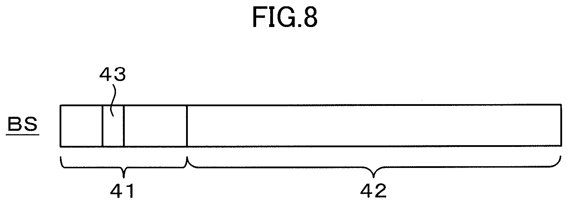

FIG. 8 is a diagram illustrating a simplified data structure of the bitstream BS. The bitstream BS contains a header 41 and a payload 42. The header 41 includes a supplemental enhancement information (SEI) region 43 for storing additional information.

The circuitry 21 encodes the image 100 containing the object into the payload 42 of the bitstream BS.

In step SP15, the circuitry 21 encodes the image detection information regarding the object into the bitstream BS. The circuitry 21 encodes the image detection information generated in step SP13 into a predetermined portion of the header 41. The predetermined portion is the SEI region 43. The predetermined portion may be VPS, SPS, PPS, PH, SH, APS, or a tile header. Alternatively, the predetermined portion may be an annotated region SEI (ARSEI) region for storing bounding box information.

In step SP16, the circuitry 21 encodes the real space detection information regarding the object into the bitstream BS. The circuitry 21 encodes the real space detection information acquired in step SP12 into a predetermined portion of the header 41. The predetermined portion is the SEI region 43. The predetermined portion may be VPS, SPS, PPS, PH, SH, APS, or a tile header. Alternatively, the predetermined portion may be an ARSEI region for storing bounding box information. Steps SP14 to SP16 may be executed simultaneously.

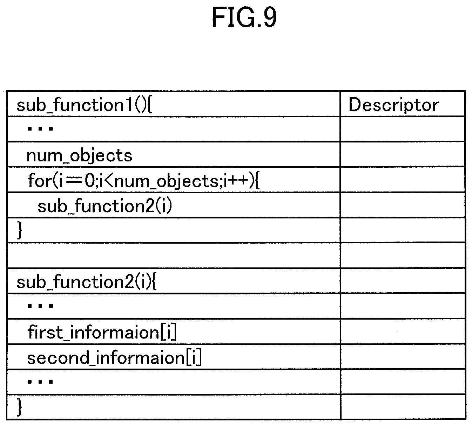

FIG. 9 is a diagram illustrating an example of syntax in a simplified manner. num_objects indicates the number of objects included in the image 100. first_information includes image detection information regarding an object. second_information includes real space detection information regarding the object.

In step SP17, the circuitry 21 transmits the bitstream BS to the decoder 2.

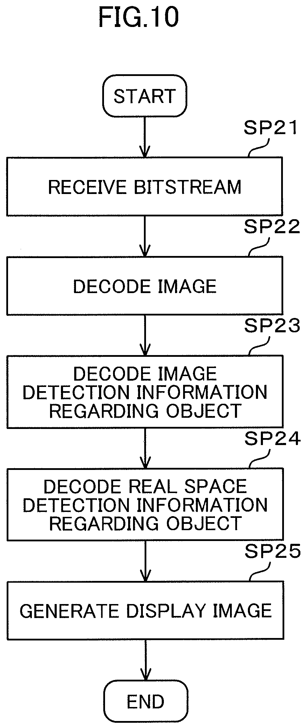

FIG. 10 is a flowchart illustrating a flow of processing executed by the circuitry 31 of the decoder 2.

In step SP21, the circuitry 31 receives the bitstream BS from the autonomous travelling device 1A.

In step SP22, the circuitry 31 decodes the image 100 including the object from the payload 42 of the bitstream BS.

In step SP23, the circuitry 31 decodes the image detection information regarding the object from the header 41 of the bitstream BS. In a case where the image detection information is encoded in the SEI region 43 of the header 41, the circuitry 31 decodes the image detection information from the SEI region 43. In a case where the image detection information is encoded in the ARSEI region of the header 41, the circuitry 31 decodes the image detection information from the ARSEI region.

In step SP24, the circuitry 31 decodes the real space detection information regarding the object from the header 41 of the bitstream BS. In a case where the real space detection information is encoded in the SEI region 43 of the header 41, the circuitry 31 decodes the real space detection information from the SEI region 43. In a case where the real space detection information is encoded in the ARSEI region of the header 41, the circuitry 31 decodes the real space detection information from the ARSEI region. Steps SP22 to SP24 may be executed simultaneously.

In step SP25, the circuitry 31 generates a display image 200 for human vision by the operator based on the image and information decoded in steps SP22 to SP24.

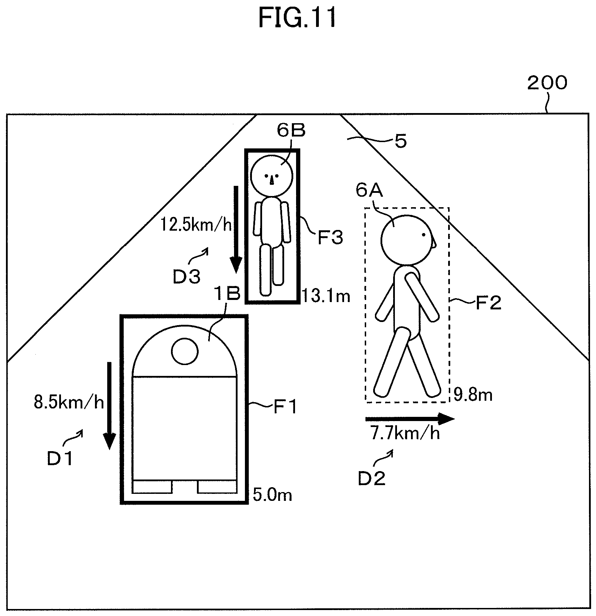

FIG. 11 is a diagram illustrating an example of the display image 200 in a simplified manner. The display image 200 includes an image 100, display position information of an object in the real space, and display movement information D1 to D3 of the object in the real space.

The display position information includes frames F1 to F3 corresponding to the bounding boxes BB1 to BB3 and distance information indicating the relative distance of each object with respect to the autonomous travelling device 1A. The circuitry 31 uses the position information of the object in the real space included in the real space detection information decoded from the bitstream BS as the display position information of the object.

The display movement information D1 to D3 includes relative speed information indicating the relative speed of each object with respect to the autonomous travelling device 1A and relative moving direction information indicating the relative moving direction of each object with respect to the autonomous travelling device 1A. In the example illustrated in FIG. 11, the relative moving direction information is represented as a figure of a bold arrow. The circuitry 31 uses the movement information of the object in the real space included in the real space detection information decoded from the bitstream BS as the display movement information D1 to D3 of the object.

In addition, the circuitry 31 highlights the frames F1 and F3 corresponding to the objects that may collide with or approach the own device (autonomous travelling device 1A) among the plurality of objects included in the display image 200 by a thick line, coloring, or the like. The circuitry 31 determines whether there is a possibility of collision or approach to the own device based on the relative position, the relative distance, and the relative moving direction of the object with respect to the own device. As a result, the operator visually recognizing the display image 200 can quickly specify an object to be focused and monitored among the plurality of objects included in the display image 200.

According to the encoder 11 of the present embodiment, by encoding the screen detection information and the real space detection information regarding the object existing around the autonomous travelling device 1 into the bitstream BS, the decoder 2 that receives the bitstream BS can effectively utilize these pieces of information, thereby improving the safety of the autonomous travelling device 1 such as the collision avoidance performance. In addition, it is possible to improve the decision making on the operation of the autonomous travelling device 1 for improving the safety of the autonomous travelling device 1 under the complicated environment.

Furthermore, according to the encoder 11 according to the present embodiment, since the image detection information includes the position information of the object in the image 100, the position information of the object in the image 100 can be effectively utilized on the decoder 2 side.

Furthermore, according to the encoder 11 according to the present embodiment, since the real space detection information includes the position information and the movement information of the object in the real space, the position information and the movement information of the object in the real space can be effectively utilized on the decoder 2 side. Note that one of the position information and the movement information of the object in the real space may be omitted.

Further, according to the encoder 11 of the present embodiment, since the position information of the object includes the coordinate value in the circular coordinate system based on the autonomous travelling device 1, the position of the object can be accurately specified by the position information including the coordinate value.

Further, according to the encoder 11 of the present embodiment, since the movement information of the object includes the relative speed and the relative moving direction of the object with respect to the autonomous travelling device 1, the speed and the moving direction of the object can be accurately specified.

Furthermore, according to the encoder 11 according to the present embodiment, the decoder 2 side can easily perform processing by encoding the image detection information and the real space detection information regarding the object into the SEI region 43 of the bitstream.

Furthermore, according to the encoder 11 according to the present embodiment, the real space detection information regarding the object can be appropriately derived by the conversion processing from the unique coordinate system of the object detection unit 13 to the common coordinate system of the autonomous travelling device 1.

In addition, according to the decoder 2 according to the present embodiment, it is possible to effectively utilize the screen detection information and the real space detection information regarding the objects existing around the autonomous travelling device 1, thereby improving the safety of the autonomous travelling device 1 such as the collision avoidance performance. In addition, it is possible to improve the decision making on the operation of the autonomous travelling device 1 for improving the safety of the autonomous travelling device 1 under the complicated environment.

Furthermore, according to the decoder 2 according to the present embodiment, since the image detection information includes the position information of the object in the image 100, the position information of the object in the image 100 can be effectively utilized.

Furthermore, according to the decoder 2 according to the present embodiment, since the real space detection information includes the position information and the movement information of the object in the real space, the position information and the movement information of the object in the real space can be effectively utilized.

Further, according to the decoder 2 of the present embodiment, since the position information of the object includes the coordinate value in the circular coordinate system based on the autonomous travelling device 1, the position of the object can be accurately specified by the position information including the coordinate value.

Further, according to the decoder 2 of the present embodiment, since the movement information of the object includes the relative speed and the relative moving direction of the object with respect to the autonomous travelling device 1, the speed and the moving direction of the object can be accurately specified.

Furthermore, according to the decoder 2 of the present embodiment, the decoder 2 side can easily perform processing by encoding the image detection information and the real space detection information regarding the object into the SEI region 43 of the bitstream.

Further, according to the decoder 2 of the present embodiment, the operator can instantaneously and accurately grasp the situation around the autonomous travelling device 1 by visually recognizing the display image 200 including the display position information and the display movement information of the object in the real space.

Furthermore, according to the decoder 2 of the present embodiment, the position information of the object included in the real space detection information is used as the display position information, and the movement information of the object included in the real space detection information is used as the display movement information, whereby the display position information and the display movement information can be easily generated.

Description is made hereinafter to various modifications of the first embodiment described above. Modifications described below can be applied in any combination.

(First Modification)

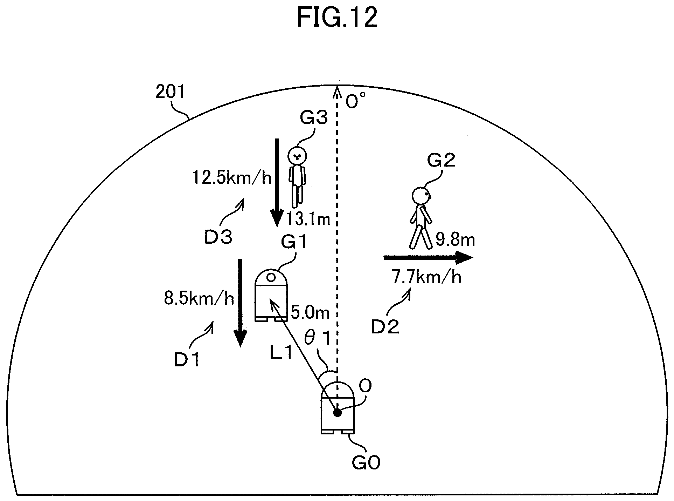

FIG. 12 is a diagram illustrating a simplified example of a display image 201 as a modification of the display image 200. The display image 201 includes a figure G0 imitating the autonomous travelling device 1A, which is the own device, a figure G1 imitating the autonomous travelling device 1B, which is an object, a figure G2 imitating the pedestrian 6A, which is an object, a figure G3 imitating the pedestrian 6B, which is an object, the display position information of the object in the real space, and the display movement information D1 to D3 of the object in the real space. The display image 201 has a coordinate plane of a circular coordinate system with the position of the figure G0 as the origin O.

The display position information includes the figures G1 to G3 and distance information indicating a relative distance of each object with respect to the autonomous travelling device 1A. For example, a distance coordinate value L1 and an angle coordinate value 01 of the circular coordinate system related to the figure G1 correspond to the distance coordinate value and the angle coordinate value included in the real space detection information regarding the autonomous travelling device 1B.

The display movement information D1 to D3 includes relative speed information indicating the relative speed of each object with respect to the autonomous travelling device 1A and relative moving direction information indicating the relative moving direction of each object with respect to the autonomous travelling device 1A. The relative moving direction information is represented as a figure of a thick arrow.

The circuitry 31 may highlight, by blinking, coloring, or the like, the figures G1 and G3 corresponding to the objects that may collide with or approach the own device among the plurality of objects.

According to the present modification, the operator visually recognizing the display image 201 can quickly specify an object to be focused and monitored among the plurality of objects.

(Second Modification)

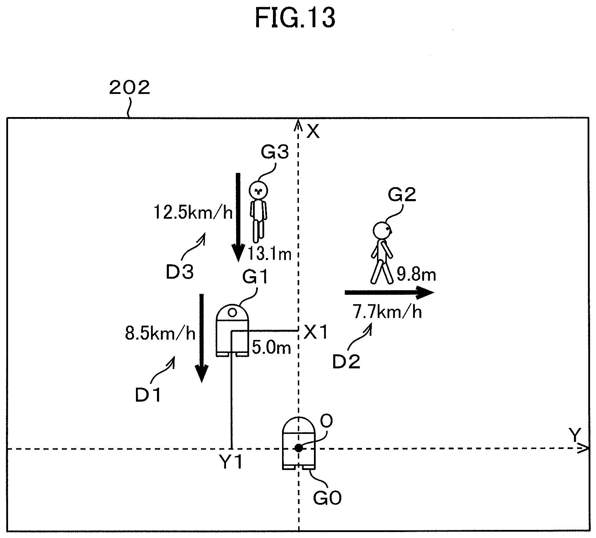

FIG. 13 is a diagram illustrating a simplified example of a display image 202 as a modification of the display image 200. The display image 202 includes figures G0 to G3, display position information of the object in the real space, and display movement information D1 to D3 of the object in the real space. The display image 202 has a coordinate plane of a Cartesian coordinate system with the position of the figure G0 as the origin O. The Cartesian coordinate system has orthogonal X and Y axes.

In the present modification, a coordinate system of the autonomous travelling device 1A is a Cartesian coordinate system, and the origin O of the coordinate system is a center point of the autonomous travelling device 1A. The X-axis of the coordinate system corresponds to the moving direction of the autonomous travelling device 1A. The X coordinate value and the Y coordinate value in the Cartesian coordinate system indicate the position of the object.

The display position information includes the figures G1 to G3 and distance information indicating a relative distance of each object with respect to the autonomous travelling device 1A. For example, the X coordinate value X1 and the Y coordinate value Y1 of the Cartesian coordinate system related to the figure G1 correspond to the X coordinate value and the Y coordinate value included in the real space detection information regarding the autonomous travelling device 1B.

The display movement information D1 to D3 includes relative speed information indicating the relative speed of each object with respect to the autonomous travelling device 1A and relative moving direction information indicating the relative moving direction of each object with respect to the autonomous travelling device 1A. The relative moving direction information is represented as a figure of a thick arrow.

The circuitry 31 may highlight, by blinking, coloring, or the like, the figures G1 and G3 corresponding to the objects that may collide with or approach the own device among the plurality of objects.

According to the present modification, the operator visually recognizing the display image 201 can quickly specify an object to be focused and monitored among the plurality of objects.

(Third Modification)

In the present modification, a correspondence in a case where the movement information (speed and moving direction) of the object is not included in the real space detection information decoded from the bitstream BS will be described.

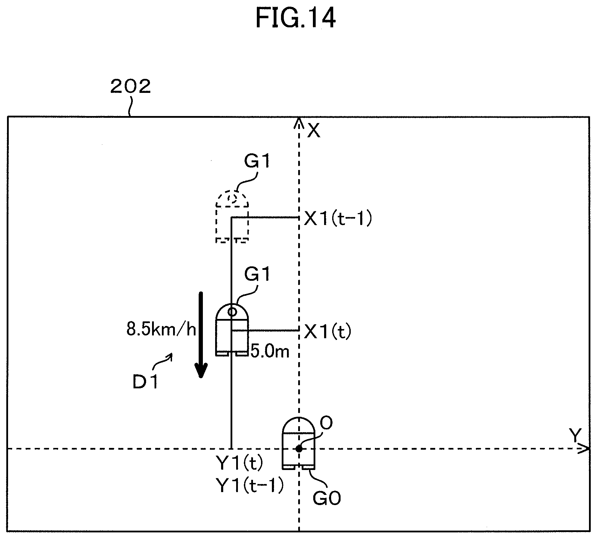

FIG. 14 is a diagram illustrating a figure G1 extracted from the display image 202 illustrated in FIG. 13. The circuitry 31 calculates the display movement information D1 of the object based on a plurality of pieces of position information at a plurality of times of the object corresponding to the figure G1, which is included in the real space detection information decoded from the bitstream BS. The circuitry 31 calculates the movement distance and the moving direction of the object in the real space based on the X coordinate value X1(t) and the Y coordinate value Y1(t) of the object at a certain time t and the X coordinate value X1(t-1) and the Y coordinate value Y1(t-1) of the object at a time t-1 before the certain time t. Furthermore, the circuitry 31 calculates the speed of the object based on the calculated movement distance and a time difference $\Delta t$ between the time t and the time t-1.

Equation (1) shows an example of a calculation formula of a speed V of the object.

[Math. 1]

$$V = \frac{\sqrt{[(X1(t)-X1(t-1)]^2 + [(Y1(t)-Y1(t-1)]^2}}{\Delta t} \quad \cdots (1)$$

Equation (2) shows an example of a calculation formula of a moving direction A of the object.

[Math. 2]

$$A = \tan^{-1} \frac{Y1(t) - Y1(t-1)}{X1(t) - X1(t-1)} \quad \cdots (2)$$

The circuitry 31 generates the display movement information D1 including the speed information indicating the calculated speed and the moving direction information indicating the calculated moving direction. In the example illustrated in FIG. 14, the Cartesian coordinate system has been described, but similar processing can be performed for a circular coordinate system.

According to the present modification, even in a case where the bitstream BS received from the autonomous travelling device 1 does not include the movement information of the object in the real space, the circuitry 31 can appropriately calculate the display movement information D1 to D3 of the object based on the plurality of pieces of position information at the plurality of times of the object in the real space.

(Fourth Modification)

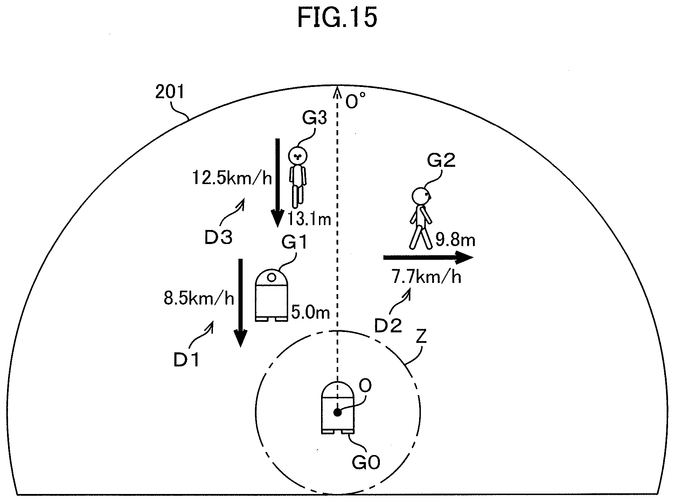

FIG. 15 is a diagram illustrating an example of the display image 201 in a simplified manner. A boundary Z is set around the figure G0. The boundary Z corresponds to, for example, a circle having a radius of 1 m centered on the position of the autonomous travelling device 1A in the real space.

In a case where a certain object enters the boundary Z, the circuitry 31 determines that the autonomous travelling device 1A is highly likely to collide with the object, and displays an alert in the display image 201. For example, in a case where the autonomous travelling device 1B corresponding to the figure G1 enters the boundary Z, the circuitry 31 highlights the figure G0 and/or the figure G1 by blinking, coloring, or the like. In the example illustrated in FIG. 15, the circular coordinate system has been described, but similar processing can be performed for a Cartesian coordinate system.

According to the present modification, the operator visually recognizing the display image 201 can quickly grasp the occurrence of the situation in which the autonomous travelling device 1A is highly likely to collide with the object, and can perform collision avoidance control such as emergency stop of the autonomous travelling device 1A by remote control. Note that the collision avoidance control may be executed by automatic control by the circuitry 31 instead of manual operation by the operator.

(Fifth Modification)

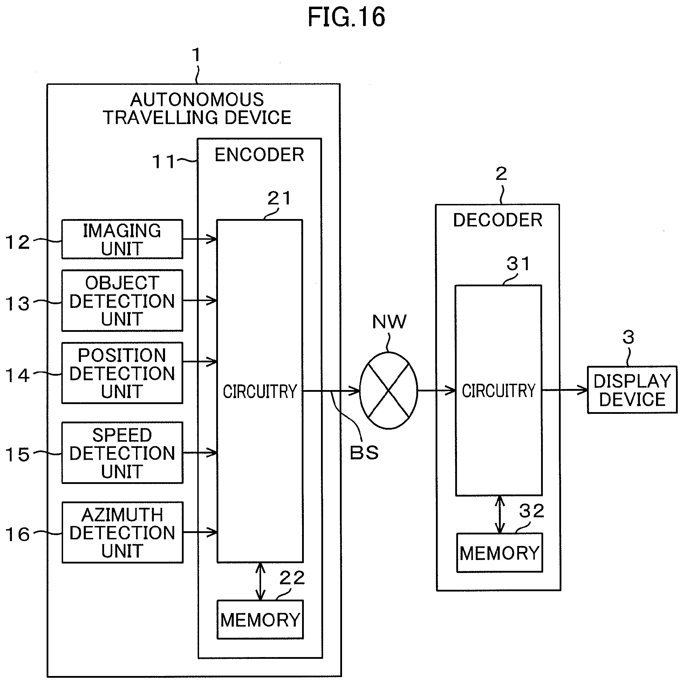

FIG. 16 is a diagram illustrating a simplified configuration of the information processing system according to a fifth modification. The autonomous travelling device 1 includes a position detection unit 14, a speed detection unit 15, and an azimuth detection unit 16 in addition to the configuration illustrated in FIG. 1.

The position detection unit 14, the speed detection unit 15, and the azimuth detection unit 16 input, to the circuitry 21, real space detection information that is detection information regarding the autonomous travelling device 1 in the real space. The real space detection information includes position information and movement information. The position information regarding the autonomous travelling device 1 includes an absolute position. The movement information regarding the autonomous travelling device 1 includes an absolute speed and an absolute moving direction.

The position detection unit 14 includes a GPS receiver and the like. The position detection unit 14 detects the absolute position of the autonomous travelling device 1, and inputs the detection value to the circuitry 21. The absolute position is a coordinate value (latitude and longitude) in a geographic coordinate system such as world coordinates.

The speed detection unit 15 includes a tachymeter and the like. The speed detection unit 15 detects the absolute speed of the autonomous travelling device 1, and inputs the detection value to the circuitry 21.

The azimuth detection unit 16 includes an acceleration sensor, a gyro sensor, or the like. The azimuth detection unit 16 detects the front direction or the absolute moving direction of the autonomous travelling device 1, and inputs the detection value to the circuitry 21.

The circuitry 21 derives real space detection information regarding the autonomous travelling device 1 based on a value obtained by converting each detection value of the position detection unit 14, the speed detection unit 15, and the azimuth detection unit 16 from a unique coordinate system of each detection unit into a common coordinate system of the autonomous travelling device 1.

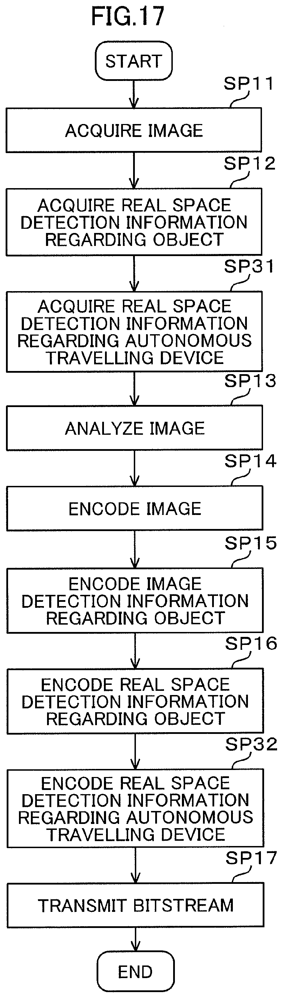

FIG. 17 is a flowchart illustrating a flow of processing executed by the circuitry 21 of the encoder 11. Description of processing similar to that in the flowchart illustrated in FIG. 2 will be omitted.

In step SP31, the circuitry 21 acquires the real space detection information regarding the autonomous travelling device 1A from the position detection unit 14, the speed detection unit 15, and the azimuth detection unit 16.

In step SP32, the circuitry 21 encodes the real space detection information regarding the autonomous travelling device 1A into the bitstream BS. The circuitry 21 encodes the real space detection information acquired in step SP31 into a predetermined portion of the header 41. The predetermined portion is the SEI region 43. The predetermined portion may be VPS, SPS, PPS, PH, SH, APS, or a tile header. Alternatively, the predetermined portion may be an ARSEI region.

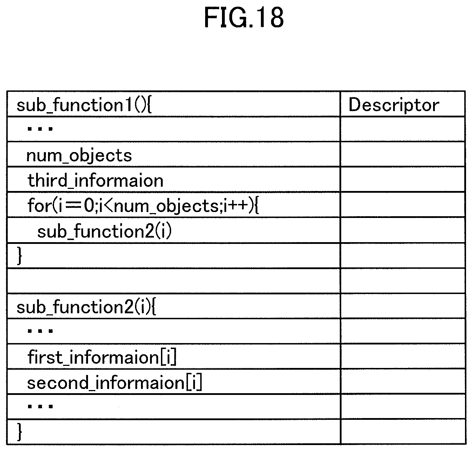

FIG. 18 is a diagram illustrating an example of syntax in a simplified manner. third_information includes the real space detection information regarding the autonomous travelling device 1A.

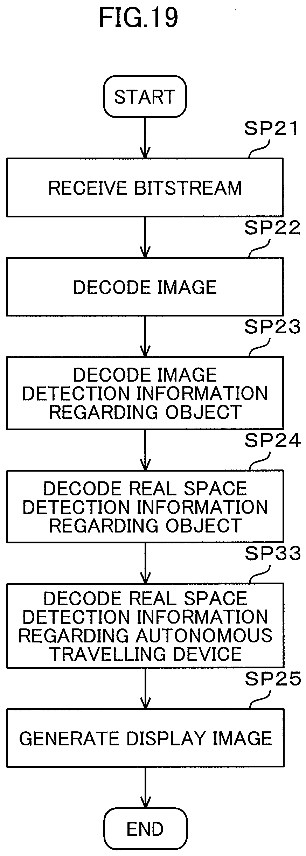

FIG. 19 is a flowchart illustrating a flow of processing executed by the circuitry 31 of the decoder 2. Description of processing similar to that in the flowchart illustrated in FIG. 10 will be omitted.

In step SP33, the circuitry 31 decodes the real space detection information regarding the autonomous travelling device 1A from the header 41 of the bitstream BS.

In step SP25, the circuitry 31 generates a display image 200 for human vision by the operator based on the image and information decoded in steps SP22 to SP24 and SP33.

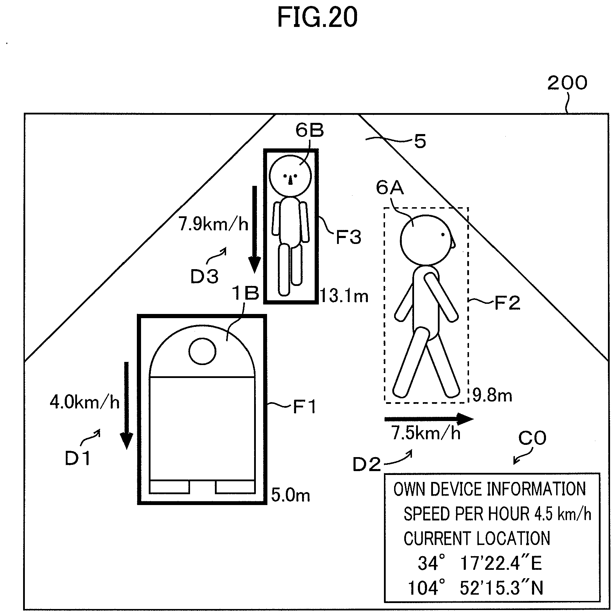

FIG. 20 is a diagram illustrating an example of the display image 200 in a simplified manner. When generating the display image 200, the circuitry 31 may convert the relative position information of the object in the real space decoded in step SP24 into the absolute position information of the object in the real space using the absolute position information of the autonomous travelling device 1A in the real space decoded in step SP33.

Further, the circuitry 31 may convert the relative movement information of the object in the real space decoded in step SP24 into the absolute movement information of the object in the real space using the absolute movement information of the autonomous travelling device 1A in the real space decoded in step SP33. In the example of the display movement information D1 to D3 illustrated in FIG. 20, the relative speed of each object with respect to the autonomous travelling device 1A is converted into the absolute speed.

Further, the circuitry 31 may include, in the display image 200, the absolute movement information and the absolute position information of the autonomous travelling device 1A in the real space decoded in step SP33. In the example illustrated in FIG. 20, the display image 200 includes own device information CO indicating the absolute speed and the absolute position of the autonomous travelling device 1A. The own device information CO may further include an absolute moving direction of the autonomous travelling device 1A. The absolute moving direction may be indicated by, for example, azimuth information indicating the moving direction of the autonomous travelling device 1A.

Note that the processing according to the present modification may be applied not only to the display image 200 but also to the display images 201 and 202.

According to the present modification, the decoder 2 can effectively utilize the absolute position information and the absolute movement information of the autonomous travelling device 1A in the real space.

(Sixth Modification)

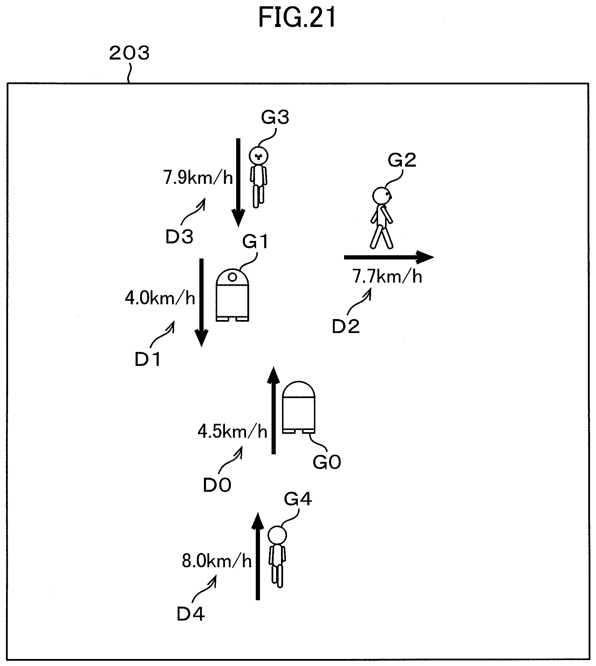

FIG. 21 is a diagram illustrating a simplified example of a display image 203 as a modification of the display image 202. The display image 203 includes a figure G4 imitating the pedestrian 6C, which is an object, in addition to the figures G0 to G3 illustrated in FIG. 13.

The pedestrian 6C is captured by the imaging unit 12 of the autonomous travelling device 1B. The circuitry 21 of the encoder 11 included in the autonomous travelling device 1B encodes the image captured by the imaging unit 12, the image detection information regarding the object included in the image, and the real space detection information regarding the object into the bitstream BS and transmits the bitstream BS to the decoder 2. The real space detection information includes relative position information and relative movement information of the pedestrian 6C with respect to the autonomous travelling device 1B, and absolute position information and absolute movement information of the autonomous travelling device 1B.

The circuitry 31 of the decoder 2 receives the plurality of bitstreams BS from the plurality of autonomous travelling devices 1A and 1B. The circuitry 31 generates the display image 203 based on the plurality of images decoded from the plurality of bitstreams BS. The circuitry 31 calculates the absolute position information and the absolute movement information of the pedestrian 6C by converting the relative position information and the relative movement information of the pedestrian 6C with respect to the autonomous travelling device 1B using the absolute position information and the absolute movement information of the autonomous travelling device 1B. As a result, the figure G4 corresponding to the pedestrian 6C whose image cannot be captured by the imaging unit 12 of the autonomous travelling device 1A can be included in the display image 203. The display movement information D0 to D4 includes absolute speed information indicating the absolute speed of each object and absolute moving direction information indicating the absolute moving direction of each object. In the example illustrated in FIG. 21, the Cartesian coordinate system has been described, but similar processing can be performed for a circular coordinate system.

According to the present modification, since the blind spots at the time of imaging can be complemented by the plurality of images captured by the plurality of autonomous travelling devices 1A and 1B, the convenience of the display image 203 can be improved.

(Second Embodiment)

In a second embodiment, communication between a plurality of autonomous travelling devices 1 will be described.

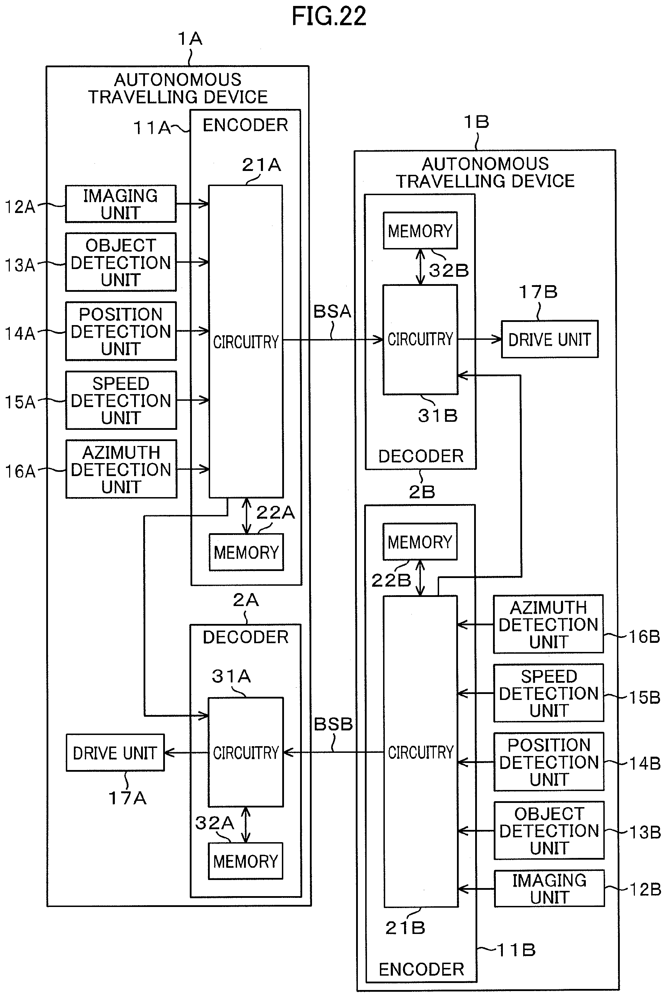

FIG. 22 is a diagram illustrating a simplified configuration of an information processing system according to the second embodiment of the present disclosure. The information processing system includes autonomous travelling devices 1A and 1B.

The autonomous travelling device 1A includes an encoder 11A, an imaging unit 12A, an object detection unit 13A, a position detection unit 14A, a speed detection unit 15A, an azimuth detection unit 16A, a decoder 2A, and a drive unit 17A. The encoder 11A includes circuitry 21A and a memory 22A. The decoder 2A includes circuitry 31A and a memory 32A. The drive unit 17A includes a travelling motor of the autonomous travelling device 1A.

The autonomous travelling device 1B includes an encoder 11B, an imaging unit 12B, an object detection unit 13B, a position detection unit 14B, a speed detection unit 15B, an azimuth detection unit 16B, a decoder 2B, and a drive unit 17B. The encoder 11B includes circuitry 21B and a memory 22B. The decoder 2B includes circuitry 31B and a memory 32B. The drive unit 17B includes a travelling motor of the autonomous travelling device 1B.

The circuitry 21B of the encoder 11B transmits a bitstream BSB, and the circuitry 31A of the decoder 2A receives the bitstream BSB. The encoder 11A is mounted on the autonomous travelling device 1B, and the decoder 2A is mounted on the autonomous travelling device 1A other than the autonomous travelling device 1B. Similarly, the circuitry 21A of the encoder 11A transmits a bitstream BSA, and the circuitry 31B of the decoder 2B receives the bitstream BSA.

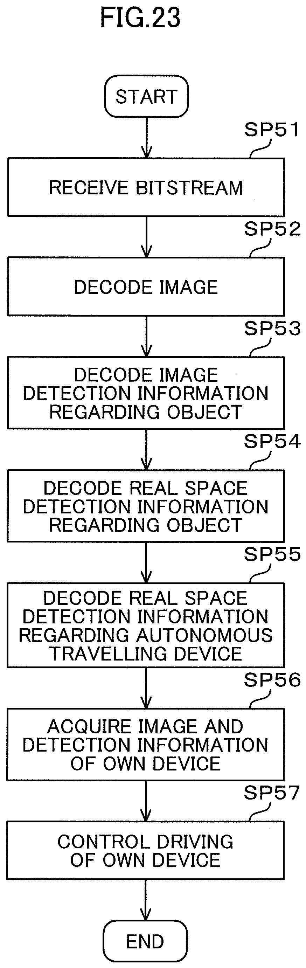

FIG. 23 is a flowchart illustrating a flow of processing executed by the circuitry 31A of the decoder 2A.

In step SP51, the circuitry 31A receives the bitstream BSB from the autonomous travelling device 1B.

In step SP52, the circuitry 31A decodes an image 100B including the object from the payload 42 of the bitstream BSB.

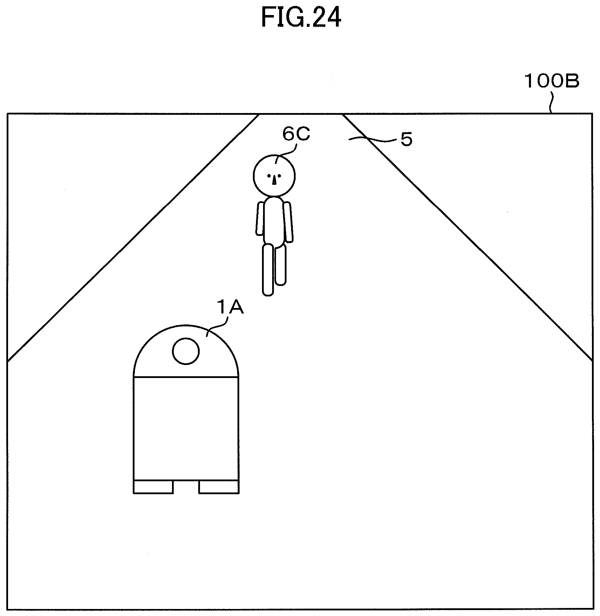

FIG. 24 is a diagram schematically illustrating an example of the image 100B captured by the imaging unit 12B of the autonomous travelling device 1B. The image 100B includes, as objects, the autonomous travelling device 1A and the pedestrian 6C walking behind the autonomous travelling device 1A.

In step SP53, the circuitry 31A decodes the image detection information regarding the object included in the image 100B from the header 41 of the bitstream BSB.

In step SP54, the circuitry 31A decodes the real space detection information regarding the object included in the image 100B from the header 41 of the bitstream BSB.

In step SP55, the circuitry 31A decodes the real space detection information regarding the autonomous travelling device 1B from the header 41 of the bitstream BSB.

In step SP56, the circuitry 31A acquires the image 100 captured by the imaging unit 12A of the autonomous travelling device 1A, the image detection information and the real space detection information regarding the object included in the image 100, and the real space detection information regarding the autonomous travelling device 1A from the circuitry 21A.

In step SP57, the circuitry 31A controls the driving of the autonomous travelling device 1A by the drive unit 17A based on the image detection information and the real space detection information regarding the object decoded from the bitstream BSB, and the image detection information and the real space detection information regarding the object acquired from the circuitry 21A.

Specifically, the circuitry 31A generates a map 300 indicating the position information and the movement information of an object existing around the autonomous travelling device 1A. At that time, the circuitry 31A converts the real space detection information regarding the object using the coordinate system based on the autonomous travelling device 1B decoded from the bitstream BSB into the real space detection information regarding the object using the coordinate system based on the autonomous travelling device 1A. For example, the circuitry 31A calculates the absolute position information and the absolute movement information of the pedestrian 6C by converting the relative position information and the relative movement information of the pedestrian 6C with respect to the autonomous travelling device 1B using the absolute position information and the absolute movement information of the autonomous travelling device 1B. The circuitry 31A includes the absolute position information and the absolute movement information of the object corresponding to the pedestrian 6C in the map 300. Furthermore, the circuitry 31A may calculate the relative position information and the relative speed information of the pedestrian 6C with respect to the autonomous travelling device 1A by converting the absolute position information and the absolute movement information of the pedestrian 6C using the absolute position information and the absolute movement information of the autonomous travelling device 1A. In this case, the circuitry 31A may include the relative position information and the relative movement information of the pedestrian 6C with respect to the autonomous travelling device 1A in the map 300.

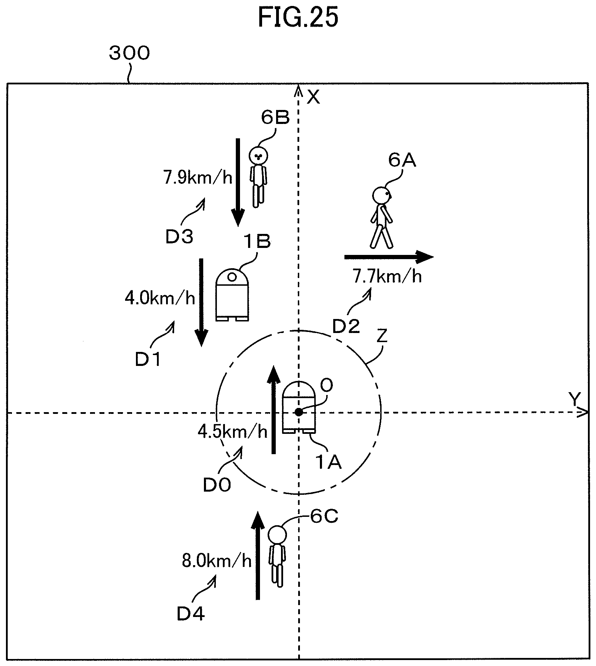

FIG. 25 is a diagram illustrating an example of the map 300 in a simplified manner. The map 300 has a coordinate plane of a Cartesian coordinate system in which the absolute position of the autonomous travelling device 1A is the origin O and the moving direction of the autonomous travelling device 1A is the X axis. The map 300 includes absolute position information and absolute movement information of the object corresponding to the pedestrian 6C in addition to the absolute position information and the absolute movement information of the objects corresponding to the autonomous travelling device 1B and the pedestrians 6A and 6B.

In the map 300, a boundary Z is set around the autonomous travelling device 1A. The boundary Z corresponds to, for example, a circle having a radius of 1 m centered on the position of the autonomous travelling device 1A in the real space. In a case where a certain object enters the boundary Z, the circuitry 31 determines that the autonomous travelling device 1A is highly likely to collide with the object, and performs collision avoidance control such as emergency stop of the autonomous travelling device 1A by the drive unit 17A.

In the example illustrated in FIG. 25, the Cartesian coordinate system has been described, but similar processing can be performed for a circular coordinate system. In addition, instead of generating the map 300, the circuitry 31A may generate a table listing position information and movement information of objects existing around the autonomous travelling device 1A.

According to the present modification, by mutually communicating the image detection information and the real space detection information regarding the object among the plurality of autonomous travelling devices 1A and 1B, the autonomous travelling device 1A can effectively utilize these pieces of information received from the other autonomous travelling device 1B for the operation control of the own device, thereby improving the safety of the autonomous travelling device 1 such as the collision avoidance performance.

**Industrial Applicability**

The present disclosure is particularly useful for application to a product delivery system, a transportation system, or the like using an autonomous travelling device.

**Claims**

1. A decoder comprising:

   circuitry; and
   a memory connected to the circuitry,
   wherein the circuitry, in operation:

      receives a bitstream from an autonomous travelling device including an imaging unit;
      decodes an image captured by the imaging unit from the bitstream;
      decodes image detection information that is detection information within the image, regarding an object included in the image, from the bitstream; and
      decodes real space detection information that is detection information in real space, regarding the object, from the bitstream.

2. The decoder according to claim 1, wherein the image detection information regarding the object includes position information of the object in the image.

3. The decoder according to claim 1, wherein the real space detection information regarding the object includes at least one of position information of the object in the real space and movement information of the object in the real space.

4. The decoder according to claim 3, wherein
   the position information of the object includes:

      a coordinate value in a circular coordinate system based on the autonomous travelling device;
      a coordinate value in a Cartesian coordinate system based on the autonomous travelling device; or
      a coordinate value in a geographic coordinate system.

5. The decoder according to claim 3, wherein
   the movement information of the object includes at least one of an absolute speed of the object or a relative speed of the object with respect to the autonomous travelling device, and an absolute moving direction of the object or a relative moving direction of the object with respect to the autonomous travelling device.

6. The decoder according to claim 1, wherein

the circuitry decodes real space detection information regarding the autonomous travelling device from the bitstream, wherein the real space detection information regarding the autonomous travelling device includes position information of the autonomous travelling device in the real space and movement information of the autonomous travelling device in the real space.

7. The decoder according to claim 6, wherein the position information of the autonomous travelling device includes a coordinate value in a geographic coordinate system.

8. The decoder according to claim 6, wherein the movement information of the autonomous travelling device includes at least one of an absolute speed and an absolute moving direction of the autonomous travelling device.

9. The decoder according to claim 6, wherein the circuitry decodes the image detection information and the real space detection information regarding the object and the real space detection information regarding the autonomous travelling device from a supplemental enhancement information (SEI) region of the bitstream.

10. The decoder according to claim 1, wherein

    the circuitry generates a display image for human vision, and
    the display image includes:

        the object; and
        at least one of display position information of the object in the real space and display movement information of the object in the real space.

11. The decoder according to claim 10, wherein

    the autonomous travelling device includes a plurality of autonomous travelling devices, and
    the circuitry generates the display image based on a plurality of images decoded from a plurality of bitstreams received from the plurality of autonomous travelling devices.

12. The decoder according to claim 10, wherein
    the circuitry:

        uses position information of the object in the real space, which is included in the real space detection information regarding the object and decoded from the bitstream, as the display position information of the object, and
        uses movement information of the object in the real space, which is included in the real space detection information regarding the object and decoded from the bitstream, as the display movement information of the object.

13. The decoder according to claim 10, wherein
    the circuitry:

        decodes position information of the autonomous travelling device in the real space and movement information of the autonomous travelling device in the real space from the bitstream;
        calculates the display position information of the object by converting position information of the object in the real space, which is included in the real space detection information regarding the object and decoded from the bitstream, using the position information of the autonomous travelling device in the real space, which is decoded from the bitstream; and
        calculates the display movement information of the object by converting movement information of the object in the real space, which is included in the real space detection information regarding the object and decoded from the bitstream, using the movement information of the autonomous travelling device in the real space decoded from the bitstream.

14. The decoder according to claim 10, wherein the circuitry calculates the display movement information of the object based on a plurality of pieces of position information of the object at a plurality of times in the real space, the plurality of pieces of position information being included in the real space detection information regarding the object and decoded from the bitstream.

15. The decoder according to claim 1, wherein

    the decoder is mounted on another autonomous travelling device other than the autonomous travelling device, and

    the circuitry controls an operation of the other autonomous travelling device based on the image detection information and the real space detection information regarding the object, which are decoded from the bitstream received from the autonomous travelling device, and image detection information and real space detection information regarding an object included in an image captured by an imaging unit of the other autonomous travelling device.

16. The decoder according to claim 15, wherein the circuitry converts the real space detection information regarding the object, which is decoded from the bitstream received from the autonomous travelling device and uses a coordinate system based on the autonomous travelling device, into the real space detection information regarding the object, which uses a coordinate system based on the other autonomous travelling device.

17. An encoder mounted on an autonomous travelling device including an imaging unit, the encoder comprising:

    circuitry; and
    a memory connected to the circuitry,
    wherein the circuitry, in operation:

        encodes an image captured by the imaging unit into a bitstream;
        encodes image detection information that is detection information within the image, regarding an object included in the image, into the bitstream; and
        encodes real space detection information that is detection information in a real space, regarding the object, into the bitstream.

18. The encoder according to claim 17, wherein the image detection information regarding the object includes position information of the object in the image.

19. The encoder according to claim 17, wherein the real space detection information regarding the object includes at least one of position information of the object in the real space and movement information of the object in the real space.

20. The encoder according to claim 19, wherein
    the position information of the object includes:

        a coordinate value in a circular coordinate system based on the autonomous travelling device;
        a coordinate value in a Cartesian coordinate system based on the autonomous travelling device; or
        a coordinate value in a geographic coordinate system.

21. The encoder according to claim 19, wherein
    the movement information of the object includes at least one of an absolute speed of the object or a relative speed of the object with respect to the autonomous travelling device, and an absolute moving direction of the object or a relative moving direction of the object with respect to the autonomous travelling device.

22. The encoder according to claim 17, wherein

    the circuitry encodes real space detection information regarding the autonomous travelling device into the bitstream, and

    the real space detection information regarding the autonomous travelling device includes position information of the autonomous travelling device in the real space and movement information of the autonomous travelling device in the real space.

23. The encoder according to claim 22, wherein the position information of the autonomous travelling device includes a coordinate value in a geographic coordinate system.

24. The encoder according to claim 22, wherein the movement information of the autonomous travelling device includes at least one of an absolute speed and an absolute moving direction of the autonomous travelling device.

25. The encoder according to claim 22, wherein the circuitry encodes the image detection information and the real space detection information regarding the object and the real space detection information regarding the autonomous travelling device from a supplemental enhancement information (SEI) region of the bitstream.

26. The encoder according to claim 17, wherein

the autonomous travelling device includes a detection unit that detects the object in the real space, and
the circuitry derives the real space detection information regarding the object based on a value obtained by converting a detection value by the detection unit from a coordinate system of the detection unit to a coordinate system of the autonomous travelling device.

27. A decoding method comprising:

by a decoder,
receiving a bitstream from an autonomous travelling device including an imaging unit;
decoding an image captured by the imaging unit from the bitstream;
decoding image detection information that is detection information within the image, regarding an object included in the image, from the bitstream; and
decoding real space detection information that is detection information in a real space, regarding the object, from the bitstream.

28. An encoding method comprising:

by an encoder mounted on an autonomous travelling device including an imaging unit,
encoding an image captured by the imaging unit into a bitstream;
encoding image detection information which is detection information within the image, regarding an object included in the image, into the bitstream; and
encoding real space detection information which is detection information in a real space, regarding the object, into the bitstream.

# FIG.1

# FIG.2

```
        ┌─────────┐
        │  START  │
        └────┬────┘
             │                SP11
      ┌──────▼──────────┐
      │  ACQUIRE IMAGE  │
      └──────┬──────────┘
             │                SP12
      ┌──────▼──────────────────┐
      │  ACQUIRE REAL SPACE     │
      │  DETECTION INFORMATION  │
      │  REGARDING OBJECT       │
      └──────┬──────────────────┘
             │                SP13
      ┌──────▼──────────┐
      │  ANALYZE IMAGE  │
      └──────┬──────────┘
             │                SP14
      ┌──────▼──────────┐
      │  ENCODE IMAGE   │
      └──────┬──────────┘
             │                SP15
      ┌──────▼──────────────────┐
      │  ENCODE IMAGE           │
      │  DETECTION INFORMATION  │
      │  REGARDING OBJECT       │
      └──────┬──────────────────┘
             │                SP16
      ┌──────▼──────────────────┐
      │  ENCODE REAL SPACE      │
      │  DETECTION INFORMATION  │
      │  REGARDING OBJECT       │
      └──────┬──────────────────┘
             │                SP17
      ┌──────▼───────────────┐
      │  TRANSMIT BITSTREAM   │
      └──────┬───────────────┘
             │
        ┌────▼────┐
        │   END   │
        └─────────┘
```

# FIG.3

# FIG.4

# FIG.5

# FIG.6

| OBJECT | CORRESPONDING BB | DISTANCE | DIRECTION | SPEED | MOVING DIRECTION |
|--------|------------------|----------|-----------|-------|------------------|
| 1B | BB1 | 5.0m | 30.0° | 8.5km/h | 180.0° |
| 6A | BB2 | 9.8m | −28.5° | 7.7km/h | −90.0° |
| 6B | BB3 | 13.1m | 10.0° | 12.5km/h | 180.0° |

# FIG.7

# FIG.8

43

BS

41          42

# FIG.9

| sub_function1(){ | Descriptor |
|---|---|
| ... | |
| num_objects | |
| for(i=0;i<num_objects;i++){ | |
| sub_function2(i) | |
| } | |
| | |
| sub_function2(i){ | |
| ... | |
| first_informaion[i] | |
| second_informaion[i] | |
| ... | |
| } | |

# FIG.10

```
        ┌─────────┐
        │  START  │
        └─────────┘
             │
             ▼                    SP21
    ┌─────────────────────┐
    │  RECEIVE BITSTREAM   │
    └─────────────────────┘
             │
             ▼                    SP22
    ┌─────────────────────┐
    │    DECODE IMAGE      │
    └─────────────────────┘
             │
             ▼                    SP23
    ┌─────────────────────┐
    │    DECODE IMAGE      │
    │ DETECTION INFORMATION│
    │  REGARDING OBJECT    │
    └─────────────────────┘
             │
             ▼                    SP24
    ┌─────────────────────┐
    │  DECODE REAL SPACE   │
    │ DETECTION INFORMATION│
    │  REGARDING OBJECT    │
    └─────────────────────┘
             │
             ▼                    SP25
    ┌─────────────────────┐
    │GENERATE DISPLAY IMAGE│
    └─────────────────────┘
             │
             ▼
        ┌─────────┐
        │   END   │
        └─────────┘
```

# FIG.11

# FIG.12

# FIG.13

# FIG.14

# FIG.15

# FIG.16

# FIG.17

```
        ┌─────────┐
        │  START  │
        └─────────┘
             │
             ▼                        SP11
┌──────────────────────────┐
│       ACQUIRE IMAGE       │
└──────────────────────────┘
             │
             ▼                        SP12
┌──────────────────────────┐
│     ACQUIRE REAL SPACE    │
│   DETECTION INFORMATION   │
│      REGARDING OBJECT     │
└──────────────────────────┘
             │
             ▼                        SP31
┌──────────────────────────┐
│     ACQUIRE REAL SPACE    │
│   DETECTION INFORMATION   │
│   REGARDING AUTONOMOUS    │
│     TRAVELLING DEVICE     │
└──────────────────────────┘
             │
             ▼                        SP13
┌──────────────────────────┐
│       ANALYZE IMAGE       │
└──────────────────────────┘
             │
             ▼                        SP14
┌──────────────────────────┐
│       ENCODE IMAGE        │
└──────────────────────────┘
             │
             ▼                        SP15
┌──────────────────────────┐
│       ENCODE IMAGE        │
│   DETECTION INFORMATION   │
│      REGARDING OBJECT     │
└──────────────────────────┘
             │
             ▼                        SP16
┌──────────────────────────┐
│     ENCODE REAL SPACE     │
│   DETECTION INFORMATION   │
│      REGARDING OBJECT     │
└──────────────────────────┘
             │
             ▼                        SP32
┌──────────────────────────┐
│     ENCODE REAL SPACE     │
│   DETECTION INFORMATION   │
│   REGARDING AUTONOMOUS    │
│     TRAVELLING DEVICE     │
└──────────────────────────┘
             │
             ▼                        SP17
┌──────────────────────────┐
│    TRANSMIT BITSTREAM     │
└──────────────────────────┘
             │
             ▼
        ┌─────────┐
        │   END   │
        └─────────┘
```

# FIG.18

| sub_function1(){ | Descriptor |
|---|---|
| ... | |
| num_objects | |
| third_informaion | |
| for(i＝0;i<num_objects;i++){ | |
| sub_function2(i) | |
| } | |
| | |
| sub_function2(i){ | |
| ... | |
| first_informaion[i] | |
| second_informaion[i] | |
| ... | |
| } | |

# FIG.19

START

↓ SP21

RECEIVE BITSTREAM

↓ SP22

DECODE IMAGE

↓ SP23

DECODE IMAGE
DETECTION INFORMATION
REGARDING OBJECT

↓ SP24

DECODE REAL SPACE
DETECTION INFORMATION
REGARDING OBJECT

↓ SP33

DECODE REAL SPACE
DETECTION INFORMATION
REGARDING AUTONOMOUS
TRAVELLING DEVICE

↓ SP25

GENERATE DISPLAY IMAGE

↓

END

# FIG.20

# FIG.21

203

G3

7.9km/h

D3

G1

4.0km/h

D1

G2

7.7km/h

D2

4.5km/h

D0

G0

G4

8.0km/h

D4

# FIG.22

# FIG.23

```
┌─────────┐
│  START  │
└─────────┘
     │
     ▼                          SP51
┌─────────────────────────┐
│   RECEIVE BITSTREAM     │
└─────────────────────────┘
     │
     ▼                          SP52
┌─────────────────────────┐
│    DECODE IMAGE         │
└─────────────────────────┘
     │
     ▼                          SP53
┌─────────────────────────┐
│     DECODE IMAGE        │
│ DETECTION INFORMATION   │
│   REGARDING OBJECT      │
└─────────────────────────┘
     │
     ▼                          SP54
┌─────────────────────────┐
│   DECODE REAL SPACE     │
│ DETECTION INFORMATION   │
│   REGARDING OBJECT      │
└─────────────────────────┘
     │
     ▼                          SP55
┌─────────────────────────┐
│   DECODE REAL SPACE     │
│ DETECTION INFORMATION   │
│ REGARDING AUTONOMOUS    │
│  TRAVELLING DEVICE      │
└─────────────────────────┘
     │
     ▼                          SP56
┌─────────────────────────┐
│   ACQUIRE IMAGE AND     │
│ DETECTION INFORMATION   │
│    OF OWN DEVICE        │
└─────────────────────────┘
     │
     ▼                          SP57
┌─────────────────────────┐
│   CONTROL DRIVING       │
│    OF OWN DEVICE        │
└─────────────────────────┘
     │
     ▼
┌─────────┐
│   END   │
└─────────┘
```

# FIG.24

# FIG.25

## INTERNATIONAL SEARCH REPORT

| International application No. |
|---|
| **PCT/JP2023/040738** |

| A. | CLASSIFICATION OF SUBJECT MATTER |
|---|---|

*H04N 21/435*(2011.01)i; *H04N 19/46*(2014.01)i
FI:    H04N21/435; H04N19/46

According to International Patent Classification (IPC) or to both national classification and IPC

| B. | FIELDS SEARCHED |
|---|---|

Minimum documentation searched (classification system followed by classification symbols)

H04N21/435; H04N19/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2018/038131 A1 (PANASONIC INTELLECTUAL PROPERTY CORPORATION OF AMERICA) 01 March 2018 (2018-03-01) <br> entire text | 1-28 |
| A | US 2021/0278840 A1 (LG ELECTRONICS INC.) 09 September 2021 (2021-09-09) <br> entire text | 1-28 |
| A | WO 2019/215704 A1 (TELEFONAKTIEBOLAGET LM ERICSSON (PUBL)) 14 November 2019 (2019-11-14) <br> entire text | 1-28 |
| A | US 2021/0217200 A1 (LG ELECTRONICS INC.) 15 July 2021 (2021-07-15) <br> entire text | 1-28 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 December 2023** | **09 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/040738**

| Patent document cited in search report | | | Publication date (day/month/year) | Patent family member(s) | | | Publication date (day/month/year) |
|---|---|---|---|---|---|---|---|
| WO | 2018/038131 | A1 | 01 March 2018 | US | 2019/0189006 | A1 | |
| | | | | entire text | | | |
| | | | | US | 2022/0238018 | A1 | |
| | | | | EP | 3506238 | A1 | |
| | | | | EP | 4160150 | A1 | |
| | | | | CN | 109643489 | A | |
| | | | | CN | 114627664 | A | |
| | | | | JP | 2022-103160 | A | |
| | | | | JP | 2023-026501 | A | |
| US | 2021/0278840 | A1 | 09 September 2021 | WO | 2020/246632 | A1 | |
| | | | | KR | 10-2019-0101926 | A | |
| WO | 2019/215704 | A1 | 14 November 2019 | US | 2021/0075537 | A1 | |
| | | | | EP | 3791527 | A1 | |
| US | 2021/0217200 | A1 | 15 July 2021 | WO | 2021/141233 | A1 | |
| | | | | EP | 4090013 | A1 | |
| | | | | KR | 10-2021-0090542 | A | |
| | | | | CN | 114946178 | A | |
| | | | | JP | 2023-509537 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210278840 A